# EUROPEAN PATENT APPLICATION

(11) **EP 2 557 530 A1**
(43) Date of publication of application: **13.02.2013**
(21) Application number: 12179749.2
(22) Date of filing: 08.08.2012
(51) Int. Cl.: G06Q 10/06

(54) **System and method for dynamic spare part management**

(30) Priority: 11.08.2011 US 201113207621
(71) Applicant: General Electric Company, Schenectady, NY 12345 (US)
(72) Inventor: Jyoti, Jeevan, 560066 Karnataka (IN); Duggal, Shyamal, 560066 Karnataka (IN); Reddy, Muralimohan, 506011 Paradesh (IN)
(74) Representative: Williams, Andrew Richard

(57) **Abstract**

A dynamic spare part management system (100) includes a database stored in a memory of a computing device, the database including at least fired hours and starts for a plurality of parts in a machine and a controller coupled to the database configured to create model factors (116) after receiving an indication of a maintenance event on the machine. The controller is also configured to create updated models (120) from existing models and the model factors. The system further includes a part replacement engine that creates an updated part replacement model (122) based on the updated model.

## Description

### BACKGROUND OF THE INVENTION

The subject matter disclosed herein relates to reliability analysis and, in particular, utilizing continuous risk prediction to manage spare part inventory and/or reliability-centered maintenance for system parts.

A typical piece of industrial equipment, for example a turbine employed in the production of electrical power, includes one or more rotating blades surrounded by an outer casing. Such turbines operate in an acceptable manner in most instances. As with other mechanical devices, the turbine may need periodic or specific maintenance.

During normal or emergency repairs, a part of the machine may require repair or replacement. Repairing a part is preferred to replacing a part when the cost of repair is less than the cost of replacement. The term "fallout" applies to the situation where the cost of repair exceeds the cost of replacement. In such a case, these parts do not return to a machine for continued service and, the thus, "fallout" of the usual part cycle of service/replace/repair/return.

Typically, reliability analysis is used to predict the risk of failure for any particular unit/part of a power plant. One technique used in reliability analysis is Weibull analysis that defines a "time-to-failure" based on a distribution for which the failure rate is proportional to a power of time. The time to failure can be used to predict the probability that a particular unit or part will fail in a specific time interval and can be expressed as a risk of failure. The risk of failure numbers can be used to create yearly fallout models. These models are based on risk numbers from the current year and are used, for example, as the basis for spare parts management in subsequent years.

### BRIEF DESCRIPTION OF THE INVENTION

According to one aspect of the invention, a dynamic spare part management system that includes a database stored in a memory of a computing device is disclosed. The database includes at least fired hours and starts for a plurality of parts in a turbine. The system of this embodiment also includes a controller coupled to the database configured to create model factors after receiving an indication of a maintenance event on the turbine.. The controller of this embodiment is also configured to create updated models from existing models and the model factors. The system also includes a part replacement engine that creates an updated part replacement model based on the updated model.

According to another aspect of the invention, a dynamic spare part management system that includes a database stored in a memory of a computing device is disclosed. The database includes at least fired hours and starts for a plurality of parts in a turbine. The system of this embodiment also includes a controller coupled to the database configured to create model factors after receiving an indication of a maintenance event on the turbine. The controller of this embodiment is also configured to create updated models from existing models and the model factors. The system also includes a part replacement engine that creates an updated part replacement model based on the updated model.

According to another aspect of the present invention, a method of dynamically managing spare parts is disclosed. The method of this embodiment includes: forming failure models for a plurality of parts and storing them on a computing device; receiving an indication that a maintenance event has occurred; importing information related to parts involved in the maintenance event from a database into the computing device; determining that at least one of the parts involved in the maintenance event has exceeded or failed to meet a lifetime expectancy predicted by the failure models; modifying the failure model to create an updated failure model; forming a part replacement model based on the updated failure model; and creating a spare part purchasing plan from the part replacement model.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is data flow diagram illustrating the operation of a system according to one embodiment of the present invention;
FIG. 2 is flow chart showing a method according to one embodiment of the present invention; and
FIG. 3 illustrates an example of a computing system on which embodiments of the present invention can be performed.

The detailed description explains embodiments of the invention, together with advantages and features, by way of example with reference to the drawings.

### DETAILED DESCRIPTION OF THE INVENTION

According to one embodiment of the present invention, the risk of failure of one or more parts is updated in real time. Such real time updates can correspond to when a particular failure occurs at a power plant. To that end, a centralized controller can receive failure or other maintenance event indications from one or more power plants and update the failure models for parts that failed or parts in operation. Accordingly, a beneficial effect of the present invention is that it provides for real-time updates to models used to manage spare part inventory.

Typically, each year a group of engineers or other professionals analyze an event database relating to the operation of one or more power plants. The event database can include information related to trips, starts, maintenance records and fired hours, for examples. From this information an annual update of fleet reliability (fallout) models can be created. The reliability models can be at one or more of the fleet, unit or component levels. The models can then, in turn, be used to plan maintenance and to order spare parts as part of inventory management.

It has been discovered that fallout rates vary based on the number of inspection/replace/repair performed on a particular part. Performing yearly planning can possibly miss this information for up to an entire year.

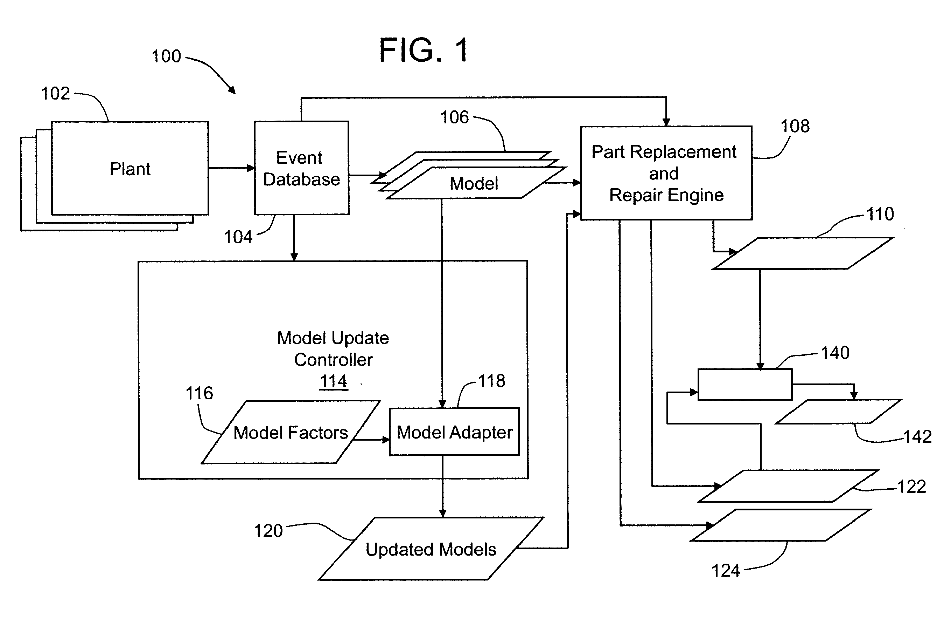

FIG. 1 illustrates a data flow diagram for a system 100 according to one embodiment of the present invention. The system includes one or more plants 102. In one embodiment, the plants 102 are power plants used to produce electricity and include at least one turbine. The turbine can be either a gas turbine or steam turbine. As before, the operation of the plants 102 can be recorded in an events database 104. Information provided to the events database 104 can include, for example, a part-by-part record of the number of hours the part has operated in an active state (fired hours) and the number and type of starts the part has experienced. Of course, other information such as environmental factors including the average plant and turbine temperature, humidity, and the like could also be provided for each plant/turbine/part.

From the information in the events database 104 one or more models 106 can be created as described above. The models 106 can be at the plant, unit (turbine) or part level. In one embodiment, these models 106 can express a fallout rate in terms of one or both of starts and fired hours. Of course, the fallout rate determination could take into account environmental or other factors as well. In one embodiment, some or all of the parts can include a plurality of models that define fallout rates for different failure modes for the part.

The models 106 are provided to a part replacement and repair engine 108. The part replacement and repair engine 108 can, given projected starts and projected fired hours, form one or both of an initial part replacement prediction 110. The replacement prediction 110 can be used, for example, to inform spare part purchasing decisions. To that end, the system 100 can include a spare part inventory manager 140 that creates spare part purchasing information 142 from the initial part replacement model 110 or the updated part replacement model 122 that is described below. In one embodiment, the spare part inventory manager 140 that creates spare part purchasing information 142 based, also, on the cost of spare parts at a current time.

The system 100 also includes a dynamic model update controller 114. The dynamic model update controller 114 may be referred to simply as a controller from time to time herein. In general, the controller 114 is configured to create model factors 116 that can be applied to each failure model. These models factors 116 represent, in one embodiment, the number of parts in a fleet of machines that have either exceeded or failed to meet the life expectancy predicted for them by the part replacement prediction 110. Stated differently, the model factors 116 scale predicted fallout time from the replacement prediction 110 to an updated fallout time based on empirical evidence gathered from working machines.

The model factors 116 can be created, in one embodiment, each time a machine is serviced. That is, the model factors 116 are dynamically created each time a maintenance event occurs because the maintenance event will result in new information being provided to the event database 106. A maintenance event can be planned or based on, for example, a trip, a failure, of a turbine. Of course, in another embodiment, the model factors 116 are only created after some of the maintenance events occur. Of course, the model factors 116 could also be created periodically in addition to when maintenance events occur.

The model factors 116 can be applied to the models 106 by a model adapter 118. The model adapter 118 can be part of the controller 114 as illustrated or be a separate element. Regardless of how configured, the model adapter 118 creates updated models 120 by combining the models 106 and the model factors 116.

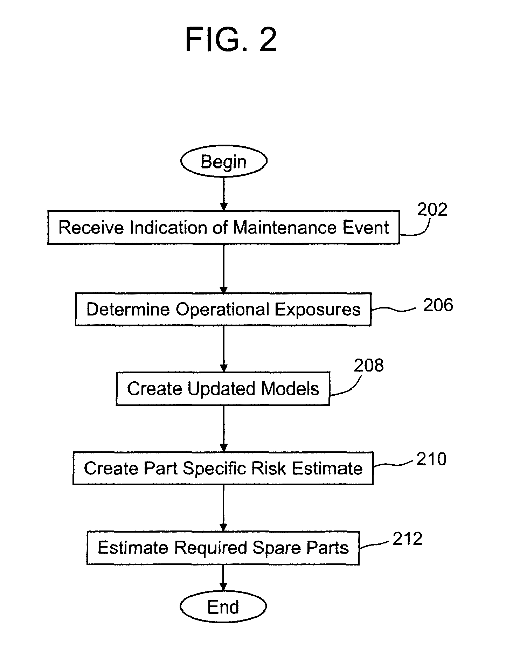

In one embodiment, the updated models 120 are provided to the part replacement and repair engine 108. The part replacement and repair engine 108 can then create an updated part replacement prediction 122 and an updated maintenance prediction 124 based on the updated model 120. It shall be understood that the updated model 120 can include updates for one or more failure modes for each part. It shall also be understood that the part replacement and repair engine 108 can utilize current fired hours and starts received directly from the event database 104 when creating the updated part replacement prediction 122 and the updated maintenance prediction 124. FIG. 2 is a flowchart showing a method of forming a dynamic inventory prediction according to one embodiment. The controller 114 of FIG. 1, for example, could perform the method illustrated in FIG. 2.

At block 202 an indication that a maintenance event has occurred is received. This indication could be received, for example, from the event database 104 shown in FIG. 1. The maintenance event could include, for example, a planned inspection or a condition-based repair. In one embodiment, the maintenance event can include inspecting one or more parts and indicating their ongoing usability. This information, as well as fired hours and starts, is transferred to and stored in the event database 104.

At block 206 the controller examines information in the database to determine the operational exposures (e.g., fired hours, starts and environmental factors) of each part. If shall be understood that the processing of block 206 could include limiting the examination to only parts that were involved in or otherwise related to the maintenance event to reduce processing time or requirements.

At block 208, the controller or other computing device updates the models of each failure mode for each type of part. The updates (model factors) can be based on the operational exposures of the part. Based on the operational exposure data gathered at block 206, at block 210, a risk estimate for each failure mode for each part can be created. This risk estimate can include a time factor and can vary for different time periods. Having knowledge of the failure risk factor for each part can lead to the creation of an estimate of required parts over one or more future time intervals as indicated at block 210.

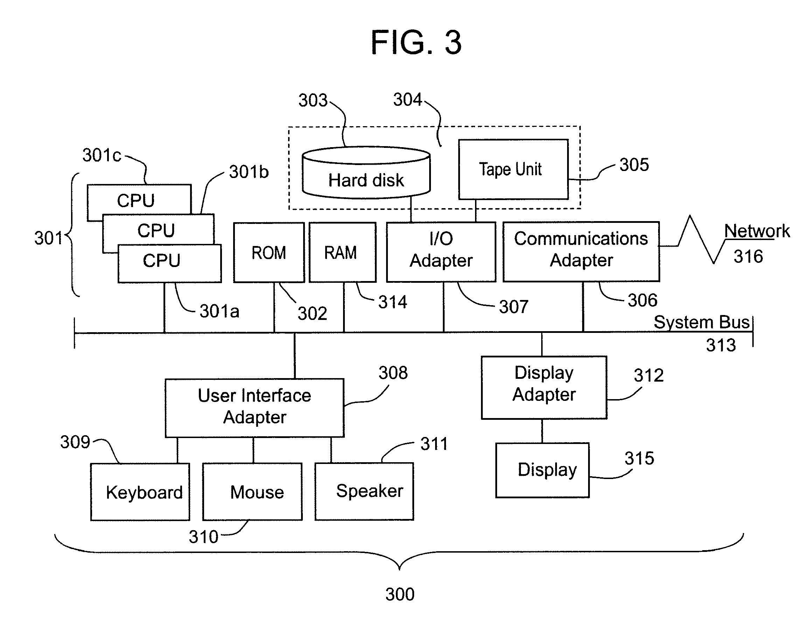

FIG. 3 shows an example of a computing system 300 on which embodiments of the present invention may be implemented. The system 300 illustrated in FIG. 3 includes one or more central processing units (processors) 301a, 301b, 301c, etc. (collectively or generically referred to as processor(s) 301). Processors 301 are coupled to system memory 314 (RAM) and various other components via a system bus 313. Read only memory (ROM) 302 is coupled to the system bus 313 and may include a basic input/output system (BIOS), which controls certain basic functions of system 300.

FIG. 3 further depicts an input/output (I/O) adapter 307 and a network adapter 306 coupled to the system bus 313. I/O adapter 307 may be a small computer system interface (SCSI) adapter that communicates with a hard disk 303 and/or tape storage drive 305 or any other similar component. I/O adapter 307, hard disk 303, and tape storage device 305 are collectively referred to herein as mass storage 303. In one embodiment, the mass storage 304 and the system memory 314 can collectively be referred to as memory, can be distributed across several computing devices and can store, for example, the database 104 shown in FIG. 1.

A network adapter 306 interconnects bus 313 with an outside network 316 enabling system 300 to communicate with other such systems. A screen (e.g., a display monitor) 315 is connected to system bus 313 by display adaptor 312. The system 100 also includes a keyboard 309, mouse 310, and speaker 311 all interconnected to the bus 113 via user interface adapter 108.

It will be appreciated that the system 300 can be any suitable computer or computing platform, and may include a terminal, wireless device, information appliance, device, workstation, mini-computer, mainframe computer, personal digital assistant (PDA) or other computing device. It shall be understood that the system 300 may include multiple computing devices linked together by a communication network. For example, there may exist a client-server relationship between two systems and processing may be split between the two.

As disclosed herein, the system 300 includes machine-readable instructions stored on machine-readable media (for example, the hard disk 304) causing the system to perform one or more of the methods disclosed herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A dynamic spare part management system (100) comprising:
a database (104) stored in a memory of a computing device (300), the database including at least fired hours and starts for a plurality of parts in a machine (102);
a controller (114) coupled to the database (104) configured to create model factors (116) after receiving an indication of a maintenance event on the machine, the controller also configured to create updated models (120) from existing models (106) and the model factors (116); and
a part replacement engine (108) that creates an updated part replacement model (122) based on the updated model (120).

2. The system (100) of claim 1, further comprising:
a spare part inventory manager (140) that creates spare part purchasing information (142) from the updated part replacement model (122).

3. The system (100) of either of claim 1 or 2, wherein each part includes one or more failure modes and a failure model associated with each of the failure modes.

4. The system (100) of any preceding claim, wherein the machine is a turbine.

5. The system (100) of claim 4, wherein the expected lifetime is based on one or both of fired hours and starts of the turbine.

6. The system (100) of claim 5, wherein the expected lifetime is based on environmental factors in the location where the turbine is located.

7. The system (100) of any preceding claim, wherein the controller includes a model adapter (118) configured to form the updated models (120) from the existing models and the model factors (116).

8. A method of dynamically managing spare parts, the method comprising:
forming failure models (106) for a plurality of parts and storing them on a computing device (300);
receiving (202) an indication that a maintenance event has occurred;
importing information related to parts involved in the maintenance event from a database (104) into the computing device;
determining (206) that at least one of the parts involved in the maintenance event has exceeded or failed to meet a lifetime expectancy predicted by the failure models;
modifying (208) the failure model (106) to create an updated failure model (120);
forming (210) a part replacement model based on the updated failure model; and
creating a spare part purchasing plan from the part replacement model (122).

9. The method of claim 8, wherein each part includes one or more failure modes and a failure model associated with each of the failure modes.

10. The method of either of claim 8 or 9, wherein the expected lifetime is based on one or both of fired hours and starts of a turbine.
